# EUROPEAN PATENT APPLICATION

(11) **EP 3 736 665 A1**
(43) Date of publication of application: **11.11.2020**
(21) Application number: 19212125.9
(22) Date of filing: 28.11.2019
(51) Int. Cl.: G06F 1/3203, G06Q 30/06, G06Q 20/32, H04N 21/4722, H04N 21/858

(54) **METHOD AND DEVICE FOR CONTROLLING APPLICATION AND COMPUTER-READABLE STORAGE MEDIUM**

(30) Priority: 09.05.2019 CN 201910385694
(71) Applicant: Beijing Xiaomi Mobile Software Co., Ltd., Beijing 100085 (CN)
(72) Inventor: LI, Guosheng, Beijing, 100085 (CN)
(74) Representative: Gevers Patents

(57) **Abstract**

The present disclosure relates to a method and a device for controlling an Application (APP) and a computer-readable storage medium. The method includes: when a working state of an image acquisition device of a terminal device is in a low-power-consumption mode and a graphic identification code discovery signal sent by the image acquisition device is received, the working state of the image acquisition device is controlled to be switched to a normal working mode; a content corresponding to a graphic identification code is recognized according to an image including the graphic identification code, which is acquired by the image acquisition device; and a preset operation corresponding to the content is triggered. In such a manner, an operating process of scanning the graphic identification code is simplified, and intelligence of the terminal device is improved. Moreover, the terminal device, when receiving the graphic identification code discovery signal sent by the image acquisition device in the low-power-consumption mode, controls the working state of the image acquisition device to be switched to the normal working mode, so that power consumed by the terminal device may be saved.

## Description

### TECHNICAL FIELD

The present disclosure generally relates to the technical field of terminal devices, and more particularly to, a method and device for controlling an Application (APP) and a computer-readable storage medium.

### BACKGROUND

Along with development of terminal device technologies, graphic scanning functions of terminal devices have become quite common and, particularly, account for a large proportion of payments in trading scenarios. For example, a shopper may scan a money collection code of a merchant by use of a payment related APP (for example, an APP like WeChat, QQ, Alipay and Union Pay, and the like) in a terminal device to complete a sales transaction with the merchant. Specifically, in a scenario where trading is completed by use of a payment function in WeChat, the shopper is required to turn on a screen of a mobile phone and unlock the mobile phone at first, then finds and starts the APP WeChat, clicks icon "+" in a WeChat interface and finally displays a money collection code picture of the merchant in a recognition box on the interface in the mobile phone to enable the mobile phone to automatically scan the money collection code. In such a scenario, multiple steps are required when a graphic scanning function of the terminal device is used, which brings complexity in operation and relatively high time cost. In addition, if many APPs are installed in the terminal device, additional time would be required to search for the payment related APP.

### SUMMARY

Accordingly, the present disclosure provides a method and a device for controlling an APP and a computer-readable storage medium.

According to a first aspect of embodiments of the present disclosure, there is provided a method for controlling an APP , including:
when a working state of an image acquisition device of a terminal device is in a low-power-consumption mode and a graphic identification code discovery signal sent by the image acquisition device is received, the working state of the image acquisition device is controlled to be switched to a normal working mode;
a content corresponding to a graphic identification code is recognized according to an image including the graphic identification code, which is acquired by the image acquisition device; and
a preset operation corresponding to the content is triggered.

With adoption of the technical solutions above, when the terminal device receives the graphic identification code discovery signal sent by the image acquisition device, the working state of the image acquisition device may be switched from the low-power-consumption mode to the normal working mode, the APP corresponding to content in the terminal device may be determined according to the content, recognized by the image acquisition device, of the graphic identification code, and the preset operation corresponding to the content is further triggered to enable the terminal device to automatically jump to an interface corresponding to the content, so that an operating process of scanning the graphic identification code is simplified, and intelligence of the terminal device is improved. Moreover, the terminal device, when receiving the graphic identification code discovery signal sent by the image acquisition device in the low-power-consumption mode, controls the working state of the image acquisition device to be switched to the normal working mode, so that power consumed by the terminal device may be saved.

According to an exemplary embodiment, the method may further include that:
if an exit instruction for the normal working mode is received, the working state of the image acquisition device is controlled to be switched to the low-power-consumption mode.

According to an exemplary embodiment, the method may further include that:
if the content corresponding to the graphic identification code is recognized, the exit instruction is generated; and/or,
if an exit operation input by a user for the normal working mode is detected, the exit instruction is generated.

According to an exemplary embodiment, the method may be applied to a processor in the terminal device, and the operation that the working state of the image acquisition device is controlled to be switched to the normal working mode if the graphic identification code discovery signal sent by the image acquisition device is received may include that:

responsive to the graphic identification code discovery signal received by the processor, wakeup is executed, and after wakeup, the working state of the image acquisition device is controlled to be switched to the normal working mode.

According to an exemplary embodiment, the operation that the preset operation corresponding to the content is triggered may include that:
if the content is payment related information, a payment function program corresponding to the payment related information in the terminal device is started.

According to a second aspect of the embodiments of the present disclosure, there is provided a device for controlling an APP, including:
a first control module configured to, when a working state of an image acquisition device of a terminal device is in a low-power-consumption mode and a graphic identification code discovery signal sent by the image acquisition device is received, control the working state of the image acquisition device to be switched to a normal working mode;
a recognition module configured to recognize a content corresponding to a graphic identification code according to an image including the graphic identification code, which is acquired by the image acquisition device; and
a triggering module configured to trigger a preset operation corresponding to the content.

The advantages and technical effects of the device according to the invention correspond to those of the method presented above.

According to an exemplary embodiment, the device may further include:
a second control module configured to, if an exit instruction for the normal working mode is received, control the working state of the image acquisition device to be switched to the low-power-consumption mode.

According to an exemplary embodiment, the device may further include:
a generation module configured to, if the content corresponding to the graphic identification code is recognized, generate the exit instruction, and/or, if an exit operation input by a user for the normal working mode, generate the exit instruction.

According to an exemplary embodiment, the device may be applied to a processor in the terminal device, and the first control module may include:
a wakeup submodule configured to, responsive to the graphic identification code discovery signal received by the processor, execute wakeup; and
a control submodule configured to, after the wakeup submodule executes wakeup, control the working state of the image acquisition device to be switched to the normal working mode.

According to an exemplary embodiment, the triggering module may include:
a first starting submodule configured to, if the content is payment related information, start a payment function program corresponding to the payment related information in the terminal device.

According to a third aspect of the embodiments of the present disclosure, there is provided a device for controlling an APP, including:
an image acquisition device;
a processor; and
a memory configured to store instructions executable by the processor,
wherein the processor may be configured to:
when a working state of the image acquisition device of a terminal device is in a low-power-consumption mode and a graphic identification code discovery signal sent by the image acquisition device is received, control the working state of the image acquisition device to be switched to a normal working mode;
recognize a content corresponding to a graphic identification code according to an image including the graphic identification code, which is acquired by the image acquisition device; and
trigger a preset operation corresponding to the content.

According to a fourth aspect of the embodiments of the present disclosure, there is provided a computer-readable storage medium having stored thereon computer program instructions that, when executed by a processor, cause the processor to implement the operations of the method for controlling an APP provided according to the first aspect of the present disclosure.

The storage medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the storage medium can be an integrated circuit in which the program is incorporated, the circuit being adapted to execute the method in question or to be used in its execution.

In one particular embodiment, the steps of the method for controlling an APP are determined by computer program instructions.

Consequently, according to a fifth aspect, the disclosure is also directed to a computer program for executing the steps of the method for controlling an APP as described above when this program is executed by a computer.

This program can use any programming language and take the form of source code, object code or a code intermediate between source code and object code, such as a partially compiled form, or any other desirable form.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for controlling an APP according to an exemplary embodiment.
Fig. 2A is a flow chart for a scanning result according to an exemplary embodiment.
Fig. 2B is a flow chart for a scanning result according to another exemplary embodiment.
Fig. 3 is a flow chart showing a method for controlling an APP according to another exemplary embodiment.
Fig. 4 is a block diagram of a device for controlling an APP according to an exemplary embodiment.
Fig. 5 is a block diagram of a device for controlling an APP according to another exemplary embodiment.
Fig. 6 is a block diagram of a device for controlling an APP according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

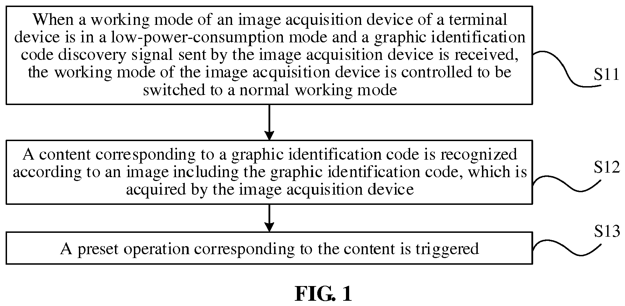

Fig. 1 is a flow chart showing a method for controlling an APP according to an exemplary embodiment. As shown in Fig. 1, the method may include the following operations.

In Operation 11, when a working state of an image acquisition device of a terminal device is in a low-power-consumption mode and a graphic identification code discovery signal sent by the image acquisition device is received, the working state of the image acquisition device is controlled to be switched to a normal working mode.

In the present disclosure, the image acquisition device is arranged in the terminal device, and may be, for example, a camera, a two-dimensional code vision sensor, a barcode vision sensor and the like. Moreover, the working state of the image acquisition device may be divided into an off mode, the low-power-consumption mode and the normal working mode. In the present disclosure, the low-power-consumption mode is a standby mode. For the image acquisition device, in an off mode, all functions are unavailable, and no power is consumed; in the low-power-consumption mode, part of functions are unavailable, relatively less power is consumed, and in the mode, a graphic identification code may be detected, but a content corresponding to the graphic identification code may not further be recognized from the graphic identification code; and in the normal working mode, relatively more power is consumed, not only may the graphic identification code be detected, but also the graphic identification code may further be scanned to obtain the content corresponding to the graphic identification code. The graphic identification code may include, but not limited to, a barcode, a two-dimensional code and another graphic identifier with preset information, etc.

As described above, the image acquisition device in the low-power-consumption mode may detect the graphic identification code but may not recognize the content corresponding to the graphic identification code. Therefore, in the present disclosure, when the graphic identification code discovery signal sent by the image acquisition device is received, the working state of the image acquisition device is controlled to be switched from the low-power-consumption mode to the normal working mode to enable the image acquisition device to further recognize the content corresponding to the graphic identification code. The graphic identification code discovery signal is configured to represent discovery of the graphic identification code.

Specifically, the method may be applied to a processor in the terminal device. A specific implementation mode for Operation 11 may be as follows: responsive to the graphic identification code discovery signal received by the processor, a wakeup operation is executed, and after wakeup of the processor, the working state of the image acquisition device is controlled to be switched to the normal working mode.

In Operation 12, a content corresponding to a graphic identification code is recognized according to an image including the graphic identification code, which is acquired by the image acquisition device.

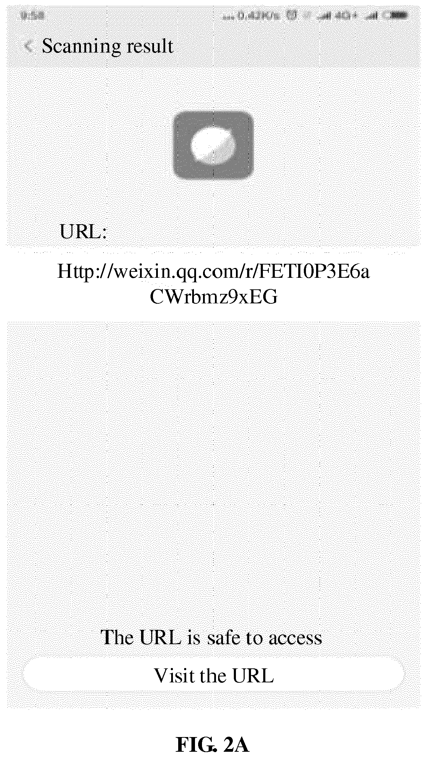

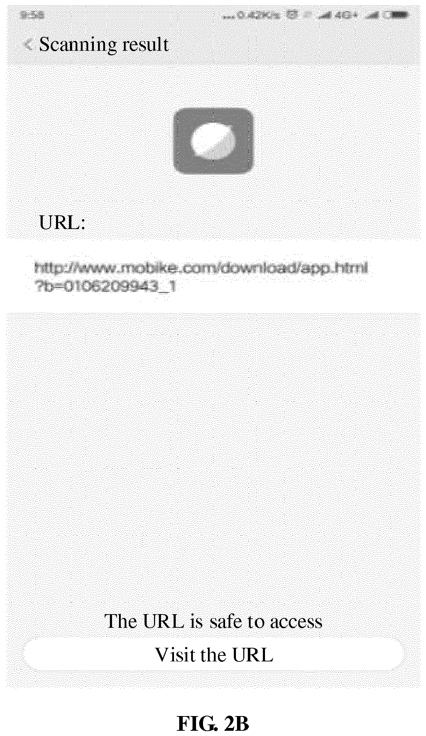

When the working state of the image acquisition device is the normal working mode, the image acquisition device may recognize the content corresponding to the graphic identification code according to the image acquired by it. In addition, since the graphic identification code contains a specific content and different graphic identification codes contain different specific contents, in the present disclosure, for different graphic identification codes, the image acquisition device recognizes different contents. For example, if the graphic identification code is a WeChat two-dimensional code, a content recognized by the image acquisition device when scanning the WeChat two-dimensional code is shown in Fig. 2A. If the graphic identification code is a Mobike two-dimensional code, a content recognized by the image acquisition device when scanning the Mobike two-dimensional code is shown in Fig. 2B.

In Operation 13, a preset operation corresponding to the content is triggered according to the content corresponding to the graphic identification code.

When the content corresponding to the graphic identification code is recognized, the preset operation corresponding to the content is triggered. The preset operation may be an operation of starting an APP corresponding to the content in the terminal device (for example, starting WeChat and QQ, etc.), and may also be an operation of starting a function program (for example, a payment function program and a friend addition function program, etc.) corresponding to the content in the terminal device.

Specifically, if the content is payment related information, a payment function program corresponding to the payment related information in the terminal device is started. Under a normal condition, an APP with a payment function may include, for example, Alipay, WeChat and Union Pay. When the APPs with the payment function are installed in the terminal device, if the content recognized by the terminal device is a WeChat Pay related content, a WeChat Pay function program in the terminal device may be started, and trading is further implemented by use of a WeChat Pay function.

In addition, it is to be noted that the content of the graphic identification code may also be user registration related information, login related information, APP downloading related information and the like, besides the payment related information. For example, if the content recognized by the terminal device is user registration related information of a certain APP, the terminal device directly jumps to a registration page of the APP for registration of a user of the APP. If the content recognized by the terminal device is login related information of WeChat, the terminal device directly jumps to a login interface of WeChat for a user to log in WeChat. Or, if the content recognized by the terminal device is APP downloading related information, the terminal device directly starts an APP (for example, an APP downloading store, a browser and an APP store, etc.) capable of downloading a corresponding APP, and in addition, the terminal device may also directly jump to a downloading interface of the APP corresponding to the APP downloading related information for the user to download the APP.

With adoption of the technical solution, when the terminal device receives the graphic identification code discovery signal sent by the image acquisition device, the working state of the image acquisition device may be switched from the low-power-consumption mode to the normal working mode, the preset operation corresponding to the content may further be determined according to the content, recognized by the image acquisition device, of the graphic identification code, and the preset operation is executed to enable the terminal device to jump to an interface corresponding to the content, so that an operating process of scanning the graphic identification code is simplified, and intelligence of the terminal device is improved. Moreover, the terminal device, when receiving the graphic identification code discovery signal sent by the image acquisition device in the low-power-consumption mode, controls the working state of the image acquisition device to be switched to the normal working mode, so that power consumed by the terminal device may be saved.

The method for controlling an APP provided in the present disclosure will be described below with reference to a complete embodiment.

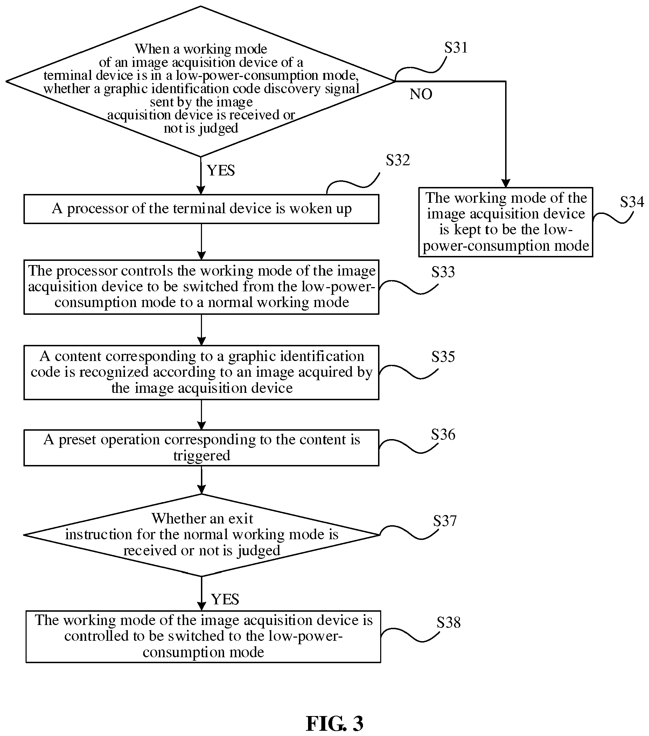

Referring to Fig. 3, Fig. 3 is a flow chart showing a method for controlling an APP according to another exemplary embodiment. As shown in Fig. 3, the method may include the following operations.

In Operation 31, when a working state of an image acquisition device of a terminal device is in a low-power-consumption mode, it is determined whether a graphic identification code discovery signal sent by the image acquisition device is received, if the graphic identification code discovery signal is received, Operations 32 and 33 are executed, otherwise Operation 34 is executed.

In Operation 32, a processor of the terminal device is woken up.

In Operation 33, the processor controls the working state of the image acquisition device to be switched from the low-power-consumption mode to a normal working mode.

In Operation 34, the working state of the image acquisition device is kept to be the low-power-consumption mode.

If the graphic identification code discovery signal sent by the image acquisition device is received, it indicates that there is a graphic identification code required to be scanned in a preset range of the terminal device. For further recognizing a content corresponding to the graphic identification code, the working state of the image acquisition device is required to be switched from the low-power-consumption mode to the normal working mode. If the graphic identification code discovery signal sent by the image acquisition device is not received, it indicates that there is no graphic identification code required to be scanned in the preset range of the terminal device, and in such case, the working state of the image acquisition device may still be kept to be the low-power-consumption mode, to save power. The preset range may be a maximum range where the image acquisition device may acquire an image, and may also be a range set by a user and smaller than the maximum range.

In Operation 35, a content corresponding to a graphic identification code is recognized according to an image including the graphic identification code, which is acquired by the image acquisition device.

In Operation 36, a preset operation corresponding to the content is triggered.

After the working state of the image acquisition device is switched from the low-power-consumption mode to the normal working mode, the image acquisition device may recognize the content corresponding to the graphic identification code and further trigger the preset operation corresponding to the content to enable the terminal device to automatically jump to an interface corresponding to the content, so that an operating process of scanning the graphic identification code is simplified, and intelligence of the terminal device is improved.

After the working state of the image acquisition device is switched to the normal working mode, Operation 37 may further be executed.

In Operation 37, it is determined whether an exit instruction for the normal working mode is received.

When the working state of the image acquisition device is the normal working mode, the terminal device may further generate the exit instruction for the normal working mode to switch the working state of the image acquisition device to the low-power-consumption mode.

An implementation mode for generation of the exit instruction can be as follows: if the content corresponding to the graphic identification code is recognized, the exit instruction is generated.

Another implementation mode for generation of the exit instruction can be as follows: if an exit operation input by a user for the normal working mode is detected, the exit instruction is generated. In the implementation mode, the exit operation may be clicking an exit button on the terminal device by the user, and may also be a swipe operation executed by the user on the terminal device and corresponding to the exit instruction, etc.

Another implementation mode for generation of the exit instruction can be as follows: if the content corresponding to the graphic identification code is recognized and the exit operation input by the user for the normal working mode is detected, the exit instruction is generated.

When the terminal device generates the exit instruction, namely the terminal device receives the exit instruction for the normal working mode, Operation 38 is executed.

In Operation 38, the working state of the image acquisition device is controlled to be switched to the low-power-consumption mode.

With adoption of the technical solution, the operating process of scanning the graphic identification code may be simplified, the intelligence of the terminal device may be improved, and power consumed by the terminal device may further be saved.

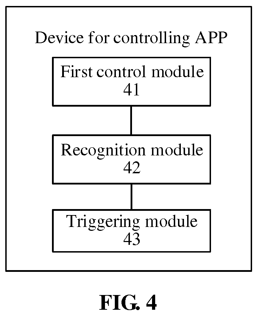

Based on the same inventive concept, the present disclosure also provides a device for controlling an APP. Referring to Fig. 4 that is a block diagram of a device for controlling an APP according to an exemplary embodiment, the device may include a first control module 41, a recognition module 42 and a starting module 43.

The first control module 41 is configured to, when a working state of an image acquisition device of a terminal device is a low-power-consumption mode and a graphic identification code discovery signal sent by the image acquisition device is received, control the working state of the image acquisition device to be switched to a normal working mode.

The recognition module 42 is configured to recognize a content corresponding to a graphic identification code according to an image including the graphic identification code, which is acquired by the image acquisition device.

The triggering module 43 is configured to trigger a preset operation corresponding to the content.

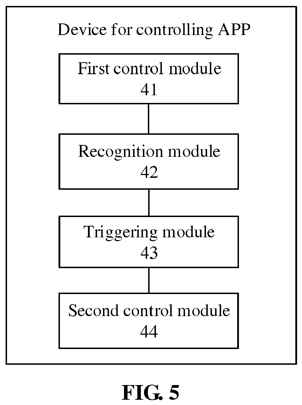

Optionally, as shown in Fig. 5, the device may further include:
a second control module 44 configured to, if an exit instruction for the normal working mode is received, control the working state of the image acquisition device to be switched to the low-power-consumption mode.

Optionally, the device may further include:
a generation module configured to, if the content corresponding to the graphic identification code is recognized, generate the exit instruction, and/or, if an exit operation input by a user for the normal working mode, generate the exit instruction.

Optionally, the device is applied to a processor in the terminal device, and the first control module may include:
a wakeup submodule configured to, responsive to the graphic identification code discovery signal received by the processor, execute wakeup; and
a control submodule configured to, after the wakeup submodule executes wakeup, control the working state of the image acquisition device to be switched to the normal working mode.

Optionally, the triggering module may include:
a first starting submodule configured to, if the content is payment related information, start a payment function program corresponding to the payment related information in the terminal device.

With respect to the device in the above embodiment, the specific manners for performing operations for individual modules therein have been described in detail in the embodiment regarding the method, which will not be elaborated herein.

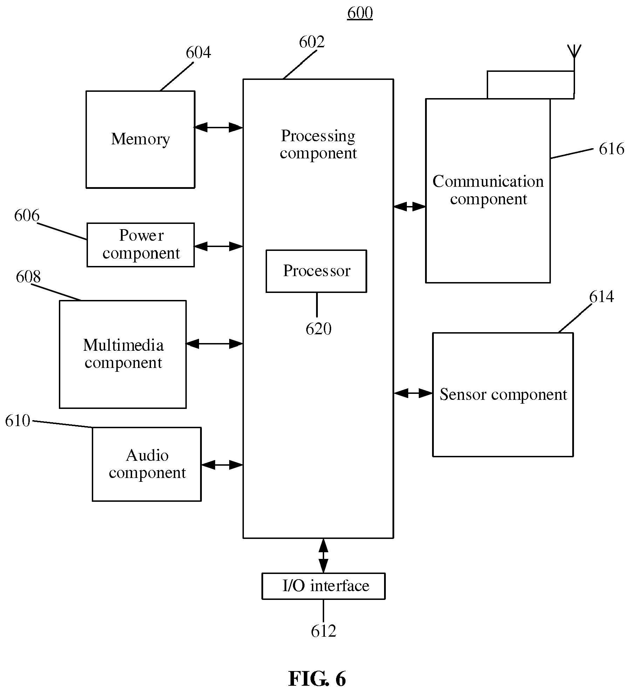

Fig. 6 is a block diagram of a device for controlling an APP according to an exemplary embodiment. For example, the device 600 may be a mobile phone, a computer, a digital broadcast terminal device, a messaging device, a gaming console, a tablet, a medical device, exercise equipment, a personal digital assistant and the like.

As shown in Fig. 6, the device 600 may include one or more of the following components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the operations of a method for controlling an APP. Moreover, the processing component 602 may include one or more modules which facilitate interaction between the processing component 602 and the other components. For instance, the processing component 602 may include a multimedia module to facilitate interaction between the multimedia component 608 and the processing component 602.

The memory 604 is configured to store various types of data to support the operation of the device 600. Examples of such data include instructions for any APPs or methods operated on the device 600, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 606 provides power for various components of the device 600. The power component 606 may include a power management system, one or more power supplies, and other components associated with generation, management and distribution of power for the device 600.

The multimedia component 608 includes a screen providing an output interface between the device 600 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 608 includes a front camera and/or a rear camera. The front camera and/or the rear camera may receive external multimedia data when the device 600 is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 includes a Microphone (MIC), and the MIC is configured to receive an external audio signal when the device 600 is in the operation mode, such as a call mode, a recording mode and a voice recognition mode. The received audio signal may further be stored in the memory 604 or sent through the communication component 616. In some embodiments, the audio component 610 further includes a speaker configured to output the audio signal.

The I/O interface 612 provides an interface between the processing component 602 and a peripheral interface module, and the peripheral interface module may be a keyboard, a click wheel, a button and the like. The button may include, but not limited to: a home button, a volume button, a starting button and a locking button.

The sensor component 614 includes one or more sensors configured to provide status assessment in various aspects for the device 600. For instance, the sensor component 614 may detect an on/off status of the device 600 and relative positioning of components, such as a display and small keyboard of the device 600, and the sensor component 614 may further detect a change in a position of the device 600 or a component of the device 600, presence or absence of contact between the user and the device 600, orientation or acceleration/deceleration of the device 600 and a change in temperature of the device 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging APP. In some embodiments, the sensor component 614 may also include an acceleration sensor, a gyroscope sensor, a magnetic sensor, a pressure sensor or a temperature sensor.

The communication component 616 is configured to facilitate wired or wireless communication between the device 600 and other equipment. The device 600 may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In an exemplary embodiment, the device 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the method for controlling an APP.

In an exemplary embodiment, there is also provided a non-transitory computer-readable storage medium including an instruction, such as the memory 604 including an instruction, and the instruction may be executed by the processor 620 of the device 600 to implement the method for controlling an APP. For example, the non-transitory computer-readable storage medium may be a ROM, a Random Access Memory (RAM), a Compact Disc Read-Only Memory (CD-ROM), a magnetic tape, a floppy disc, an optical data storage device and the like.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for controlling an Application, APP, **characterized in that** the method comprises:
controlling a working state of an image acquisition device to be switched to a normal working mode when the working state of the image acquisition device of a terminal device is in a low-power-consumption mode and a graphic identification code discovery signal sent by the image acquisition device is received (S11);
recognizing a content corresponding to a graphic identification code according to an image including the graphic identification code, which is acquired by the image acquisition device (S12); and
triggering a preset operation corresponding to the content (S13).

2. The method of claim 1, further comprising:
controlling the working state of the image acquisition device to be switched to the low-power-consumption mode if an exit instruction for the normal working mode is received.

3. The method of claim 1, further comprising:
generating the exit instruction if the content corresponding to the graphic identification code is recognized; and/or,
generating the exit instruction if an exit operation input by a user for the normal working mode is detected.

4. The method of claim 1, wherein the method is applied to a processor in the terminal device, and controlling the working state of the image acquisition device to be switched to the normal working mode if the graphic identification code discovery signal sent by the image acquisition device is received comprises:
responsive to the graphic identification code discovery signal received by the processor, executing wakeup, and after wakeup, controlling the working state of the image acquisition device to be switched to the normal working mode.

5. The method of any one of claims 1 to 4, wherein triggering the preset operation corresponding to the content comprises:
starting a payment function program corresponding to the payment related information in the terminal device if the content is payment related information.

6. A device for controlling an Application, APP, **characterized in that** the device comprises:
a first control module (41) configured to, when a working state of an image acquisition device of a terminal device is in a low-power-consumption mode and a graphic identification code discovery signal sent by the image acquisition device is received, control the working state of the image acquisition device to be switched to a normal working mode;
a recognition module (42) configured to recognize a content corresponding to a graphic identification code according to an image including the graphic identification code, which is acquired by the image acquisition device; and
a triggering module (43) configured to trigger a preset operation corresponding to the content.

7. The device of claim 6, further comprising:
a second control module (44) configured to, if an exit instruction for the normal working mode is received, control the working state of the image acquisition device to be switched to the low-power-consumption mode.

8. The device of claim 6, further comprising:
a generation module configured to, if the content corresponding to the graphic identification code is recognized, generate the exit instruction, and/or, if an exit operation input by a user for the normal working mode, generate the exit instruction.

9. The device of claim 6, wherein the device is applied to a processor in the terminal device, the first control module comprises:
a wakeup submodule configured to, responsive to the graphic identification code discovery signal received by the processor, execute wakeup; and
a control submodule configured to, after the wakeup submodule executes wakeup, control the working state of the image acquisition device to be switched to the normal working mode.

10. The device of any one of claims 6 to 9, wherein the triggering module (43) comprises:
a first starting submodule configured to, if the content is payment related information, start a payment function program corresponding to the payment related information in the terminal device.

11. A device for controlling an Application, APP, comprising:
an image acquisition device;
a processor; and
a memory configured to store instructions executable by the processor,
wherein the processor is configured to the operations of the method according to any one of the preceding claims 1 to 5.

12. A computer-readable storage medium having stored thereon computer program instructions that, when executed by a processor, cause the processor to implement the operations of the method according to any one of the preceding claims 1 to 5.

13. A computer program including instructions for executing the steps of a method for controlling an Application, APP, according to any one of the preceding claims 1 to 5 when said program is executed by a computer.
